# EUROPÄISCHE PATENTSCHRIFT

(11) **EP 3 197 726 B1**
(45) Veröffentlichungstag und Bekanntmachung des Hinweises auf die Patenterteilung: **26.02.2020**
(21) Anmeldenummer: 15752960.3
(22) Anmeldetag: 31.07.2015
(51) Int. Cl.: B60R 16/033, H02J 7/14, B60R 16/03

(54) **BORDNETZ**
VEHICLE ELECTRICAL SYSTEM
RÉSEAU DE BORD

(30) Priorität: 23.09.2014 DE 102014219138
(43) Veröffentlichungstag der Anmeldung: 02.08.2017
(73) Patentinhaber: Robert Bosch GmbH, 70442 Stuttgart (DE)
(72) Erfinder: FASSNACHT, Jochen, 71272 Renningen (DE)
(86) Internationale Anmeldenummer: PCT/EP2015/067617
(87) Internationale Veröffentlichungsnummer: WO 2016/045837

(56) Entgegenhaltungen:
- EP-A1- 1 777 116
- WO-A1-99/42331
- WO-A2-03/105330
- DE-A1-102005 042 665
- DE-A1-102008 010 979
- DE-A1-102010 029 788
- DE-A1-102010 040 864

## Beschreibung

Die Erfindung betrifft ein Bordnetz, insbesondere ein elektrisches Bordnetz, für ein Kraftfahrzeug mit mehreren Verbrauchern und ein Verfahren zum Versorgen mehrerer Verbraucher in einem Bordnetz.

### Stand der Technik

Elektrische Bordnetze in Kraftfahrzeugen weisen eine Vielzahl von elektrischen Verbrauchern auf, die von einer Energieversorgung, wie bspw. einer Batterie oder einem Generator, mit elektrischer Energie versorgt werden. Darüber hinaus verfügen elektrische Bordnetze auch über elektromechanische bzw. elektronische Bauteile, wie bspw. Schalter und Spannungswandler.

Die elektrische Energie im Kraftfahrzeug sollte derart verfügbar sein, dass das Kraftfahrzeug jederzeit gestartet werden kann und während des Betriebs eine ausreichende Stromversorgung sichergestellt ist, so dass zumindest sicherheitsbezogene Einrichtungen, wie bspw. die Bremsen und die Lenkung und auch das Licht, sicher und durchgängig versorgt werden. Im abgestellten Zustand sollen elektrische Verbraucher noch für einen angemessenen Zeitraum betreibbar sein, ohne dass ein nachfolgender Start unmöglich wird. Zu beachten ist, dass es im Falle eines Ausfalls in der Spannungsversorgung oder bei einem Kurzschluss im Bordnetz zu einem Ausfall der Versorgung der Verbraucher kommen kann, was wiederum zum Ausfall von Funktionen des Kraftfahrzeugs führt.

Die Einführung neuartiger elektronischer oder mechatronischer Systeme im Kraftfahrzeug, wie elektrischer Lenkung oder neuartiger Assistenzsysteme, wie z. B. Bremsassistent oder Adaptive Cruise Control (adaptiver Fahrtregler), welche den Energieverbrauch des Fahrzeug senken und die Sicherheit bzw. den Komfort für den Fahrer deutlich erhöhen, findet derzeit verstärkt statt. Zukünftig sind weitere Systeme, die autonomes oder teilautonomes Fahren ermöglichen, in Planung oder werden aktuell entwickelt. Falls solche Systeme in einem Fahrzeug verbaut sind, so müssen diese auch zuverlässig funktionieren bzw. die Anforderungen der funktionalen Sicherheit erfüllen. Hierbei sind besonders sogenannte Common-Cause-Fehler bzw. Einfach-Fehler, die dann zur schlagartigen Fehlfunktion des gesamten Systems oder Teilsystems führen, zu vermeiden.

Der Einsatz derartiger neuer Systeme stellt somit auch erhöhte Anforderungen an die Sicherheit bzw. Verfügbarkeit des Bordnetzes, da diese Systeme meist aus dem Standard-12V-Bordnetz des Fahrzeugs versorgt werden. Insbesondere bei Nutzfahrzeugen finden auch Bordnetze mit höherer Spannung Verwendung. Ein Ausfall des Bordnetzes basierend auf einem Einfachfehler darf in keinem Fall zum Ausfall eines sicherheitsbezogenen Systems führen, das für die sichere Funktion des Fahrzeugs unabdingbar ist und sich aus dem 12V-Bordnetz versorgt.

Ein einfacher Fehler, wie bspw. ein Kurzschluss im Bordnetz oder der Ausfall einer Batterie oder des Generators, darf nicht zum Wegfall der Lenkbarkeit oder Bremsbarkeit des Fahrzeugs führen. Ein derartiger Defekt darf auch nicht dazu führen, dass beispielsweise ein System zur autonomen oder teilautonomen Steuerung des Fahrzeugs schlagartig ausfällt. Ein Autofahrer, der sich auf das System verlässt und eventuell gerade unachtsam ist, würde eventuell bei einem schlagartigen Ausfall zu spät oder falsch reagieren, was zu einer Gefährdung führen könnte.

Das aktuell in den meisten Fahrzeugen verbaute Bordnetz mit einem Generator und einer 12-V-Batterie ist für die bisher verbauten elektrischen Systeme meist ausreichend. Für neuartige sicherheitsbezogene Systeme, deren Funktion für den sicheren Betrieb des Fahrzeugs unabdingbar ist, sind neuartige Bordnetztopologien erforderlich, welche die Energieversorgung für diese sicherheitsbezogenen Verbraucher zuverlässig sicherstellen.

Wie bereits ausgeführt wurde sind in modernen Bordnetzen zunehmend sicherheitsbezogene Verbraucher vorgesehen, die wichtige Funktionen im Kraftfahrzeug ausführen und in keinem Fall ausfallen dürfen. Um dies zu erreichen, ist es bekannt, sicherheitsbezogene Verbraucher an ein oder mehrere Teilbordnetze anzuschließen, wobei jedes Teilbordnetz über eine eigene Energieversorgung, die bspw. eine Batterie und/oder einen Generator umfassen kann, verfügt. Bei Ausfall der Energieversorgung eines Teilbordnetzes können sicherheitsbezogene Verbraucher von anderen Teilbordnetzen versorgt werden und damit deren Betrieb aufrechterhalten werden.

Aus der Druckschrift DE 10 2008 010 979 A1 ist ein Bordnetz für ein Kraftfahrzeug bekannt, das in mindestens ein erstes Teilbordnetz und ein zweites Teilbordnetz unterteilt ist. Einige der elektrischen Verbraucher werden sowohl aus dem ersten Teilbordnetz als auch dem zweiten Teilbordnetz mit elektrischer Energie versorgt. Hierzu umfasst mindestens ein Teilbordnetz elektronisch steuerbare Schaltelemente zum Zu- und Abschalten von Spannungsquellen innerhalb des Teilbordnetzes.

Die Druckschrift DE 10 2005 042 665 A1 beschreibt ein elektrisches Bordnetz, das ein erstes Teilbordnetz mit einer Energiequelle und ein zweites Teilbordnetz mit wenigstens einem sicherheitsbezogenen Verbraucher sowie einem elektrischen Energiespeicher umfasst. Der sicherheitsbezogene Verbraucher ist mit beiden Teilbordnetzen verbunden, wohingegen herkömmliche elektrische Verbraucher nur mit einem Teilbordnetz verbunden sind. Hierzu ist zwischen den beiden Teilbordnetzen ein Koppelelement vorgesehen, das eine Übertragung von elektrischer Energie vom ersten in das zweite Teilbordnetz aber nicht in umgekehrter Richtung zulässt.

Die Druckschrift DE 10 2010 040 864 A1 beschreibt ein Verfahren und eine Steuervorrichtung zum Betreiben eines Bordnetzes. Das Bordnetz umfasst ein erstes Teilnetz und ein zweites Teilnetz. Wird in dem ersten Teilnetz eine elektrische Spannungsspitze erkannt, so wird ein elektrischer Strom von dem ersten Teilnetz in das zweite Teilnetz umgeleitet.

Die Druckschrift DE 10 2010 029 788 A1 beschreibt ein Bordnetz für ein Kraftfahrzeug mit einem ersten Bordnetzzweig und mindestens einem zweiten Bordnetzzweig. In dem Bordnetz sind Verbraucher, wobei zumindest ein Verbraucher vorgesehen ist, der wahlweise aus dem ersten oder dem zweiten Bordnetz zu versorgen ist.

### Offenbarung der Erfindung

Vor diesem Hintergrund werden ein Bordnetz nach Anspruch 1 und ein Verfahren gemäß Anspruch 7 vorgeschlagen. Ausführungsformen ergeben sich aus den abhängigen Ansprüchen und der Beschreibung.

Gemäß dem beschriebenen Bordnetz werden unterschiedliche Verbraucher unterschiedlichen Sicherheitsstufen zugeordnet. Dabei kann bei einer Ausführung eine erste Sicherheitsstufe für Verbraucher mit hohem Sicherheitsbezug, eine zweite Sicherheitsstufe für Verbraucher mit mittlerem Sicherheitsbezug und eine dritte Sicherheitsstufe für Verbraucher ohne Sicherheitsbezug vorgesehen sein. Es ist zu beachten, dass die Anzahl der Teilbordnetze ebenfalls variieren kann. Dies bedeutet, dass zwei, drei, vier, fünf oder mehr Teilbordnetze und damit eine entsprechende Anzahl an unabhängigen Energieversorgungen vorgesehen sein können.

In einer alternativen Ausführungsform sind mehr als drei Sicherheitsstufen vorgesehen. In diesem Fall können auch mehr als zwei Teilbordnetze vorgesehen sein. Verbraucher der höchsten Sicherheitsstufe können dann redundant aus allen Teilbordnetzen versorgt werden. In absteigender Relevanzstufe verringert sich dann für die eingestuften Verbraucher die Anzahl der redundant vorgesehenen und/oder zuschaltbaren Teilbordnetze und damit Energieversorgungen.

Bei einer Ausführung kann ein Bordnetz zwei Teilbordnetze umfassen, wobei der Verbraucher mit hohem Sicherheitsbezug redundant aus beiden Teilbordnetzen versorgt werden kann, der Verbraucher mit mittlerem Sicherheitsbezug über Schalter mit beiden Teilbordnetzen zu verbinden ist, so dass dieser Verbraucher jeweils aus einem der beiden Teilbordnetze mit Energie versorgt werden kann, und Verbraucher ohne Sicherheitsbezug nur mit einem der beiden Teilbordnetze verbunden sind. Von Bedeutung ist weiterhin, dass defekte Teilbordnetze oder Verbraucher über Schalter abgetrennt werden können. Die Schalter können auch dazu dienen, Verbraucher von Teilbordnetzen zu trennen.

Ein Teilbordnetz zeichnet sich durch eine eigene, typischerweise von den anderen Teilbordnetzen unabhängige Energieversorgung aus. Als Energieversorgung kann bspw. eine Batterie und/oder ein Generator dienen. Weiterhin kann ein Teilbordnetz über einen Energiespeicher verfügen.

Verbraucher in dem Bordnetz sind Einrichtungen bzw. Komponenten des Fahrzeugs, wie bspw. elektronischen Bremssystemen, Lichtsystemen und elektronischen Lenksystemen, zugeordnet. Je nach zugeordneter Komponente erfolgt die Einstufung des betreffenden Verbrauchers in eine Sicherheitsstufe.

Es werden hierin mehrere neue Bordnetztopologien vorgestellt, die eine sichere Versorgung sicherheitsbezogener Verbraucher gewährleisten und die "gewöhnlichen" Verbraucher effizient versorgen. Dies soll mit möglichst wenig Zusatzaufwand erledigt werden. Es werden Bordnetztopologien vorgestellt, die für beliebige Verbraucher, auch für Verbraucher mit hohen Versorgungsansprüchen, geeignet sind.

Diese Bordnetztopologien ermöglichen die Einstufung der Verbraucher bzw. der diesen Verbrauchern zugeordneten Einrichtungen in unterschiedliche Sicherheitsstufen. Dabei wird berücksichtigt, wie wichtig die Einrichtung für den sicheren Betrieb des Kraftfahrzeugs ist.

Jedes Teilbordnetz wird bspw. über ein Basisbordnetz von einem dort angeordneten Generator und/oder einer Batterie mit Energie versorgt, wobei das Teilbordnetz durch einen Spannungswandler vom Basisbordnetz getrennt ist und über einen separaten Energiespeicher verfügen kann, so dass Verbraucher in diesem Teilbordnetz mit hoher Spannungsqualität und hoher Zuverlässigkeit versorgt werden können. Neben den Verbrauchern können in den Teilbordnetzen auch Überwachungsgeräte vorgesehen sein.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Kurze Beschreibung der Zeichnungen
- Figur 1: zeigt eine Ausführung der Schaltungsanordnung.
- Figur 2: zeigt eine weitere Ausführung der Schaltungsanordnung.

### Ausführungsformen der Erfindung

Die Erfindung ist anhand von Ausführungsformen in den Zeichnungen schematisch dargestellt und wird nachfolgend unter Bezugnahme auf die Zeichnungen ausführlich beschrieben.

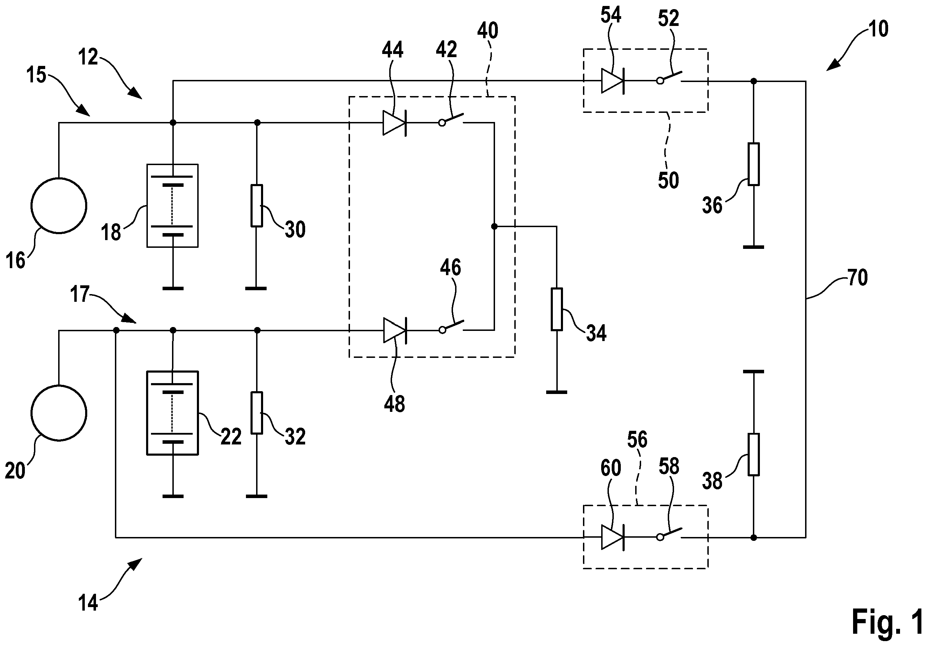

Figur 1 zeigt ein Bordnetz, das insgesamt mit der Bezugsziffer 10 bezeichnet ist. Dieses umfasst ein erstes Teilbordnetz 12 und ein zweites Teilbordnetz 14. Dem ersten Teilbordnetz 12 sind ein erster Generator 16 und eine erste Batterie 18 zugeordnet. Das zweite Teilbordnetz 14 verfügt über einen zweiten Generator 20 und eine zweite Batterie 22. Weiterhin zeigt die Darstellung einen ersten Versorgungseingang 15 eines ersten Verbrauchers R1a 30, einen zweiten Versorgungseingang 17 eines ersten Verbrauchers R1b 32, einen zweiten Verbraucher R2 34 sowie zwei Verbraucher R3a 36 und R3b 38.

Außerdem zeigt Figur 1 eine erste Schalteinheit 40 mit einem ersten Schalter S2a 42, einer ersten Diode 44, einem zweiten Schalter S2b 46 und einer zweiten Diode 48, eine zweite Schalteinheit 50 mit einem Schalter S3a 52 und einer Diode 54 und eine dritte Schalteinheit 56 mit einem Schalter S3b 58 und einer Diode 60.

Die Bordnetzverbraucher können in drei Kategorien eingeteilt werden, die mit steigender Zahlengröße einen abnehmenden Sicherheitsbezug aufweisen:
Verbraucher R1 30 und 32: Verbraucher mit redundanter Versorgung mit hohem Sicherheitsbezug
Verbraucher R2 34: Verbraucher mit fehlertoleranter Versorgung mit mittlerem Sicherheitsbezug
Verbraucher R3a 36 und R3b 38: Verbraucher ohne Sicherheitsbezug
In Figur 1 sind Verbraucher der Kategorie R1a 30 und R1b 32 aufgeführt. Dies verdeutlicht einen Verbraucher R1, der über R1a 30 und R1b redundant versorgt wird. Bei Verbrauchern der Kategorie R3 bedeutet R3a 36 und R3b 38, dass zwei getrennte Verbraucher hier versorgt werden und keine redundante Versorgung eines Verbrauchers vorliegt.

Figur 1 zeigt die Versorgung eines Verbrauchers der ersten Kategorie und eines der zweiten Kategorie. Der Verbraucher R1, nämlich R1a 30 und R2b 32, wird aus jedem der zwei Teilbordnetze 12, 14 mit Generatoren 16, 20 und Batterien 18, 22 redundant versorgt. Er fällt erst aus, falls beide Teilbordnetze 12, 14 gleichzeitig mit Kurzschluss, Unter- oder Überspannung ausfallen. Der Verbraucher mit mittlerem Sicherheitsbezug R2 34 wird im Normalfall aus beiden Teilbordnetzen 12, 14 versorgt. Falls eines der Teilbordnetze 12, 14 mit Batterie 18 bzw. 22 und Generator 16 bzw. 20 mit Kurzschluss, Unter- oder Überspannung ausfällt, so wird über den Schalter S2a 42 oder den Schalter S2b 46 dieses entsprechende Teilbordnetz 12 bzw. 14 vom Verbraucher R2 34 abgetrennt und er wird über das andere Teilbordnetz 12 bzw. 14 weiter versorgt.

Falls der Verbraucher R2 34 einen Kurzschluss verursacht, so wird er ebenfalls über den Schalter S2a 42 und den Schalter S2b 46 von den beiden Teilbordnetzen 12, 14 getrennt, so dass diese weiter funktionieren. Die Verbraucher ohne Sicherheitsbezug R3a 36 und R3b 38 werden aus je einem der beiden Teilbordnetze 12 bzw. 14 versorgt. Über die Schalter S3a 52 und S3b 58 ist sichergestellt, dass ein Kurzschluss eines derartigen Verbrauchers nicht die Versorgung der sicherheitsbezogenen Verbraucher gefährdet. Die beiden Versorgungsleitungen für die Verbraucher ohne Sicherheitsbezug können optional über eine Verbindung 70 verbunden werden.

Es ist zu beachten, dass in diesem Fall die Verbraucher aus dem Teilnetz 12 bzw. 14 versorgt werden, welches die höhere Spannung aufweist und somit bei gleicher Auslegung nicht so stark belastet ist. Die Dioden 44, 48, 54 und 60 bei den Schaltern S2a 42, S2b 46 bzw. S3a 52 und S3a 58 können entfallen, falls eine Rekuperationsfähigkeit für die Verbraucher R2 34 bzw. R3a 36 und R3b 38 gewünscht ist. In diesem Falle muss dann der entsprechende Schalter bidirektional sperren können und die Logik die vorstehend genannten Fehlerfälle sicher verhindern, d. h. sie muss sicher zwischen Überspannung und Rekuperation unterscheiden können, was anhand der Höhe der Spannung möglich sein sollte.

Das Bordnetz 10 kann deutlich vereinfacht werden, wenn sichergestellt werden kann, dass die Verbraucher R1a 30, R1b 32 und R2 34 keinen Kurzschluss und keine Überspannung verursachen können, die zu einem Ausfall der beiden Spannungsversorgungen führen.

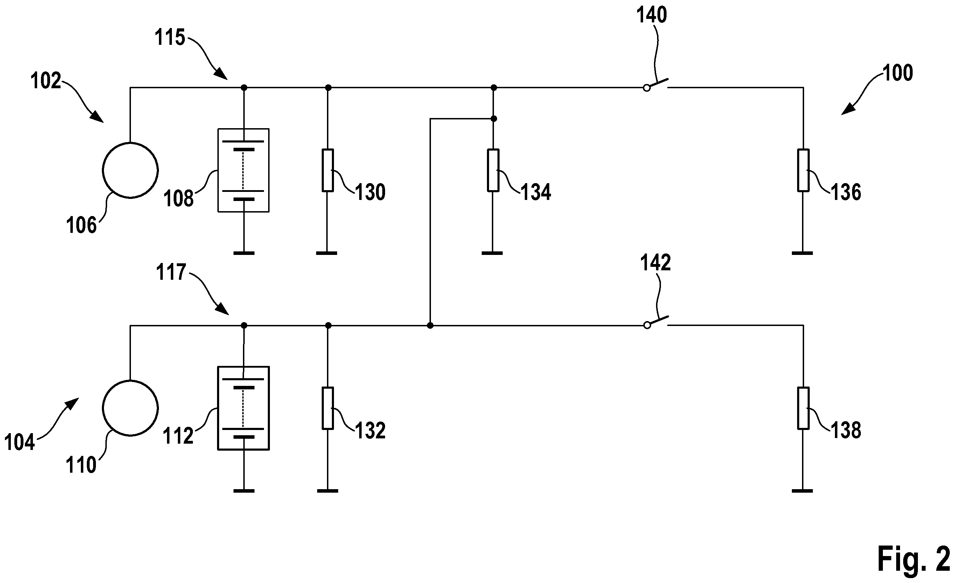

Figur 2 zeigt eine solche Ausführung eines Bordnetzes, das mit Bezugsziffer 100 bezeichnet ist. Dieses umfasst ein erstes Teilbordnetz 102 und ein zweites Teilbordnetz 104. Das erste Teilbordnetz 102 umfasst einen ersten Generator 106 und eine erste Batterie 108 als Energieversorgung. Dem zweiten Teilbordnetz 104 sind als Energieversorgung ein zweiter Generator 110 und eine zweite Batterie 112 zugeordnet. Weiterhin zeigt die Darstellung einen ersten Versorgungseingang 115 eines ersten Verbrauchers R1a 130, einen zweiten Versorgungseingang 117 eines ersten Verbraucher R1b 132, einen zweiten Verbraucher R2 134, einen ersten dritten Verbraucher R3a 136 und einen zweiten dritten Verbraucher R3b 138. Die Darstellung zeigt außerdem einen ersten Schalter S3a 140 und einen zweiten Schalter S3b 142.

Es wurde erkannt, dass bei kleinen Versorgungsleistungen der Kurzschlussschutz bspw. über Schmelzsicherungen oder entsprechende wegschmelzende Drähte erfolgen kann. In einem derartigen Fall ist der Kurzschlussstrom so gering, dass die Versorgungsquellen diesen noch sicher bereitstellen können und daher kein kurzzeitiger Ausfall eines Teilbordnetzes erfolgt. Überspannungen müssen in diesem Fall mit anderen Mitteln beispielweise mit Varistoren verhindert werden, falls die betroffenen Verbraucher und Quellen nicht schon per se überspannungssicher, z. B. nicht regenerationsfähig, sind.

Bei dem Bordnetz 100 der Figur 2 entfallen die meisten Schalter. Lediglich die Verbraucher ohne Sicherheitsbezug müssen noch im Kurzschlussfall oder Überlastfall weggeschaltet werden können. Hierfür sind die Schalter S3a 140 und S3b 142 verbaut.

Die Bordnetze 10 und 100 der Figuren 1 und 2 zeigen, dass je höher die Sicherheitsstufe des Verbrauchers ist, desto näher dieser an der Energieversorgung, der zugeordneten Batterie und/oder dem zugeordneten Generator positioniert ist. Dies bedeutet, dass die Verbraucher in Abhängigkeit von ihrer zugeordneten Sicherheitsstufe in Bezug zu den Energieversorgungen positioniert sind.

## Patentansprüche

1. Bordnetz mit einer Anzahl an Verbrauchern (30, 32, 34, 36, 38, 130, 132, 134, 136, 138), wobei das Bordnetz (10, 100) mindestens zwei Teilbordnetze (12, 14, 102, 104) umfasst, die jeweils über eine eigene Energieversorgung verfügen, wobei die Verbraucher (30, 32, 34, 36, 38, 130, 132, 134, 136, 138) unterschiedlichen Sicherheitsstufen zugeordnet sind, wobei eine erste Sicherheitsstufe für Verbraucher (30, 32, 130, 132) mit hohem Sicherheitsbezug, eine zweite Sicherheitsstufe für Verbraucher (34,134) mit mittlerem Sicherheitsbezug und eine dritte Sicherheitsstufe für Verbraucher (36, 38) ohne Sicherheitsbezug vorgesehen sind, wobei mindestens einer der Verbraucher (30, 32, 130, 132) der ersten Sicherheitsstufe zugeordnet ist und redundant aus wenigstens zwei der mindestens zwei Teilbordnetze (102, 104) zu versorgen ist, und wobei mindestens einer der Verbraucher (34, 134) der zweiten Sicherheitsstufe zugeordnet ist und über Schalter (42, 46) mit beiden Teilbordnetzen zu verbinden ist, so dass dieser Verbraucher jeweils aus einem der mindestens zwei Teilbordnetze (12, 14, 102, 104) mit Energie zu versorgen ist, wobei die Verbraucher (30, 32, 34, 36, 38, 130, 132, 136, 138) in Abhängigkeit von ihrer zugeordneten Sicherheitsstufe in Bezug zu den Energieversorgungen positioniert sind, und zwar so, dass je höher die Sicherheitsstufe des Verbrauchers (30, 32, 34, 36, 38, 130, 132, 134, 136, 138) ist, desto näher dieser an der Energieversorgung, einer zugeordneten Batterie und/oder einem zugeordneten Generator positioniert ist.

2. Bordnetz nach Anspruch 1, bei dem wenigstens ein Versorgungseingang (15, 17, 115, 117) des mindestens einen Verbrauchers (30, 32, 130, 132), der der ersten Sicherheitsstufe zugeordnet ist, redundant ausgeführt ist.

3. Bordnetz nach Anspruch 1 oder 2, bei dem mindestens einer der Verbraucher (36, 38, 136, 138) der dritten Sicherheitsstufe zugeordnet ist und nur mit einem der mindestens zwei Teilbordnetze (12, 14, 102, 104) verbunden ist.

4. Bordnetz nach einem der Ansprüche 1 bis 3, bei dem die Verbraucher (30, 32, 34, 36, 38, 130, 132, 134, 136, 138) unter Berücksichtigung ihrer Sicherheitsstufe in dem Bordnetz (10, 100) positioniert sind.

5. Bordnetz nach einem der Ansprüche 1 bis 4, das zum Einsatz in einem Kraftfahrzeug oder einer mobilen Arbeitsmaschine ausgebildet ist.

6. Bordnetz nach einem der Ansprüche 1 bis 5, das über ein Basisbordnetz verfügt, in dem die Energieversorgungen der Teilbordnetze (12, 14, 102, 104) angeordnet sind.

7. Verfahren zum Versorgen mehrerer Verbraucher (30, 32, 34, 36, 38, 130, 132, 134, 136, 138), die in einem Bordnetz (10, 100), insbesondere einem Bordnetz (10, 100) nach einem der Ansprüche 1 bis 6, angeordnet sind, das mindestens zwei Teilbordnetze (12, 14, 102, 104) zur Versorgung der Verbraucher (30, 32, 34, 36, 38, 130, 132, 134, 136, 138) umfasst, wobei die Verbraucher (30, 32, 34, 36, 38, 130, 132, 134, 136, 138) unterschiedlichen Sicherheitsstufen zugeordnet werden, wobei eine erste Sicherheitsstufe für Verbraucher (30, 32, 130, 132) mit hohem Sicherheitsbezug, eine zweite Sicherheitsstufe für Verbraucher (34, 134) mit mittlerem Sicherheitsbezug und eine dritte Sicherheitsstufe für Verbraucher (36, 38, 136, 138) ohne Sicherheitsbezug vorgesehen sind, wobei mindestens einer der Verbraucher (34, 134) der zweiten Sicherheitsstufe zugeordnet wird und über Schalter (42, 46, 52, 58) mit beiden Teilbordnetzen verbunden wird, so dass dieser Verbraucher (34, 134) jeweils aus einem der mindestens zwei Teilbordnetze (12, 14, 102, 104) mit Energie versorgt werden kann, wobei die Verbraucher (30, 32, 34, 36, 38, 130, 132, 134, 136, 138) in Abhängigkeit von ihrer zugeordneten Sicherheitsstufe in Bezug zu den Energieversorgungen positioniert sind, und zwar so, dass je höher die Sicherheitsstufe des Verbrauchers (30, 32, 34, 36, 38, 130, 132, 134, 136, 138) ist, desto näher dieser an der Energieversorgung, der zugeordneten Batterie und/oder dem zugeordneten Generator positioniert ist.

8. Verfahren nach Anspruch 8, bei dem mindestens einer der Verbraucher (30, 32, 130, 132) hohen Sicherheitsstufe zugeordnet wird und redundant aus wenigstens zwei der mindestens zwei Teilbordnetzen (12, 14, 102, 104) versorgt werden kann.

9. Verfahren nach Anspruch 7 oder 8, bei dem mindestens einer der Verbraucher einer niedrigen Sicherheitsstufe zugeordnet wird und nur mit einem der mindestens zwei Teilbordnetze (12, 14, 102, 104) verbunden wird.

## Claims

1. On-board power system having a number of consumers (30, 32, 34, 36, 38, 130, 132, 134, 136, 138), wherein the on-board power system (10, 100) comprises at least two on-board power subsystems (12, 14, 102, 104) that each have their own power supply, wherein the consumers (30, 32, 34, 36, 38, 130, 132, 134, 136, 138) are associated with different safety levels, wherein a first safety level for consumers (30, 32, 130, 132) having a high safety rating, a second safety level for consumers (34, 134) having a medium safety rating and a third safety level for consumers (36, 38) without a safety rating are provided, wherein at least one of the consumers (30, 32, 130, 132) is associated with the first safety level and is to be supplied redundantly from at least two of the at least two on-board power subsystems (102, 104), and wherein at least one of the consumers (34, 134) is associated with the second safety level and is to be connected to both on-board power subsystems by way of switches (42, 46) such that said consumer is to be supplied with power from a respective one of the at least two on-board power subsystems (12, 14, 102, 104), wherein the consumers (30, 32, 34, 36, 38, 130, 132, 136, 138) are positioned with respect to the power supplies depending on their associated safety level, specifically such that the higher the safety level of the consumer (30, 32, 34, 36, 38, 130, 132, 134, 136, 138), the closer said consumer is positioned to the power supply, an associated battery and/or an associated generator.

2. On-board power system according to Claim 1, in which at least one supply input (15, 17, 115, 117) of the at least one consumer (30, 32, 130, 132) that is associated with the first safety level is designed to be redundant.

3. On-board power system according to Claim 1 or 2, in which at least one of the consumers (36, 38, 136, 138) is associated with the third safety level and is connected to just one of the at least two on-board power subsystems (12, 14, 102, 104).

4. On-board power system according to one of Claims 1 to 3, in which the consumers (30, 32, 34, 36, 38, 130, 132, 134, 136, 138) are positioned in the on-board power system (10, 100) taking into account their safety level.

5. On-board power system according to one of Claims 1 to 4, designed for use in a motor vehicle or a mobile working machine.

6. On-board power system according to one of Claims 1 to 5, having a basic on-board power system in which the power supplies of the on-board power subsystems (12, 14, 102, 104) are arranged.

7. Method for supplying a plurality of consumers (30, 32, 34, 36, 38, 130, 132, 134, 136, 138) that are arranged in an on-board power system (10, 100), in particular an on-board power system (10, 100) according to one of Claims 1 to 6, and that comprises at least two on-board power subsystems (12, 14, 102, 104) for supplying the consumers (30, 32, 34, 36, 38, 130, 132, 134, 136, 138), wherein the consumers (30, 32, 34, 36, 38, 130, 132, 134, 136, 138) are associated with different safety levels, wherein a first safety level for consumers (30, 32, 130, 132) having a high safety rating, a second safety level for consumers (34, 134) having a medium safety rating and a third safety level for consumers (36, 38, 136, 138) without a safety rating are provided, wherein at least one of the consumers (34, 134) is associated with the second safety level and is connected to both on-board power subsystems by way of switches (42, 46, 52, 58) such that said consumer (34, 134) is able to be supplied with power from a respective one of the at least two on-board power subsystems (12, 14, 102, 104), wherein the consumers (30, 32, 34, 36, 38, 130, 132, 134, 136, 138) are positioned with respect to the power supplies depending on their associated safety level, specifically such that the higher the safety level of the consumer (30, 32, 34, 36, 38, 130, 132, 134, 136, 138), the closer said consumer is positioned to the power supply, the associated battery and/or the associated generator.

8. Method according to Claim 8, wherein at least one of the consumers (30, 32, 130, 132) is associated with a high safety level and is able to be supplied redundantly from at least two of the at least two on-board power subsystems (12, 14, 102, 104).

9. Method according to Claim 7 or 8, in which at least one of the consumers is associated with a low safety level and is connected to just one of the at least two on-board power subsystems (12, 14, 102, 104).

## Revendications

1. Réseau de bord comprenant plusieurs consommateurs (30, 32, 34, 36, 38, 130, 132, 134, 136, 138), dans lequel le réseau de bord (10, 100) comprend au moins deux réseaux de bord partiels (12, 14, 102, 104), dont chacun possède sa propre alimentation en énergie, dans lequel les consommateurs (30, 32, 34, 36, 38, 130, 132, 134, 136, 138) sont associés à différents niveaux de sécurité, dans lequel il est prévu un premier niveau de sécurité pour des consommateurs (30, 32, 130, 132) présentant une consigne de sécurité élevée, un deuxième niveau de sécurité pour des consommateurs (34, 134) présentant une consigne de sécurité moyenne et un troisième niveau de sécurité pour des consommateurs (36, 38) ne présentant pas de consigne de sécurité, dans lequel au moins l'un des consommateurs (30, 32, 130, 132) est associé au premier niveau de sécurité et doit être alimenté de manière redondante à partir d'au moins deux des au moins deux réseaux de bord partiels (102, 104), et dans lequel au moins l'un des consommateurs (34, 134) est associé au deuxième niveau de sécurité et doit être relié aux deux réseaux de bord partiels par des commutateurs (42, 46), de manière à ce que ledit consommateur soit respectivement alimenté en énergie à partir de l'un desdits au moins deux réseaux de bord partiels (12, 14, 102, 104), dans lequel les consommateurs (30, 32, 34, 36, 38, 130, 132, 136, 138) sont positionnés par rapport aux alimentations en énergie en fonction du niveau de sécurité qui leur est associé, de telle sorte que plus le niveau de sécurité du consommateur (30, 32, 34, 36, 38, 130, 132, 134, 136, 138) est élevé, plus il est positionné près de l'alimentation en énergie, d'une batterie associée et/ou d'un générateur associé.

2. Réseau de bord selon la revendication 1, dans lequel au moins une entrée d'alimentation (15, 17, 115, 117) dudit au moins un consommateur (30, 32, 130, 132) associé au premier niveau de sécurité est conçue de manière redondante.

3. Réseau de bord selon la revendication 1 ou 2, dans lequel au moins l'un des consommateurs (36, 38, 136, 138) est associé au troisième niveau de sécurité et n'est relié qu'à l'un desdits au moins deux réseaux de bord partiels (12, 14, 102, 104).

4. Réseau de bord selon l'une des revendications 1 à 3, dans lequel les consommateurs (30, 32, 34, 36, 38, 130, 132, 134, 136, 138) sont positionnés dans le réseau de bord (10, 100) en tenant compte de leur niveau de sécurité.

5. Réseau de bord selon l'une des revendications 1 à 4, qui est conçu pour être utilisé dans un véhicule automobile ou une machine de travail mobile.

6. Réseau de bord selon l'une des revendications 1 à 5, qui présente un réseau de bord de base dans lequel sont disposées les alimentations en énergie des réseaux de bord partiels (12, 14, 102, 104).

7. Procédé d'alimentation de plusieurs consommateurs (30, 32, 34, 36, 38, 130, 132, 134, 136, 138) qui sont disposés dans un réseau de bord (10, 100), en particulier un réseau de bord (10, 100) selon l'une des revendications 1 à 6, qui comprend au moins deux réseaux de bord partiels (12, 14, 102, 104) pour l'alimentation des consommateurs (30, 32, 34, 36, 38, 130, 132, 134, 136, 138), dans lequel les consommateurs (30, 32, 34, 36, 38, 130, 132, 134, 136, 138) sont associés à différents niveaux de sécurité, dans lequel il est prévu un premier niveau de sécurité pour des consommateurs (30, 32, 130, 132) présentant une consigne de sécurité élevée, un deuxième niveau de sécurité pour des consommateurs (34, 134) présentant une consigne de sécurité moyenne et un troisième niveau de sécurité pour des consommateurs (36, 38, 136, 138) ne présentant pas de consigne de sécurité, dans lequel au moins l'un des consommateurs (34, 134) est associé au deuxième niveau de sécurité et est relié aux deux réseaux de bord partiels par des commutateurs (42, 46, 52, 58), de manière à ce que ledit consommateur (34, 134) puisse être respectivement alimenté en énergie à partir de l'un desdits au moins deux réseaux de bord partiels (12, 14, 102, 104), dans lequel les consommateurs (30, 32, 34, 36, 38, 130, 132, 134, 136, 138) sont positionnés par rapport aux alimentations en énergie en fonction du niveau de sécurité qui leur est associé, de telle sorte que plus le niveau de sécurité du consommateur (30, 32, 34, 36, 38, 130, 132, 134, 136, 138) est élevé, plus il est positionné près de l'alimentation en énergie, de la batterie associée et/ou du générateur associé.

8. Procédé selon la revendication 8, dans lequel un niveau de sécurité élevé est associé à au moins l'un des consommateurs (30, 32, 130, 132) et ce dernier peut être alimenté de manière redondante à partir d'au moins deux desdits au moins deux réseaux de bord partiels (12, 14, 102, 104).

9. Procédé selon la revendication 7 ou 8, dans lequel un faible niveau de sécurité est associé à au moins l'un des consommateurs et ce dernier n'est relié qu'à l'un desdits au moins deux réseaux de bord partiels (12, 14, 102, 104).
